# EUROPÄISCHE PATENTSCHRIFT

(11) **EP 1 382 952 B1**
(45) Veröffentlichungstag und Bekanntmachung des Hinweises auf die Patenterteilung: **10.09.2008**
(21) Anmeldenummer: 03090196.1
(22) Anmeldetag: 02.07.2003
(51) Int. Cl.: G01L 9/00

(54) **Mikromechanischer Druckgeber mit Sensor an Trennmembran des Gehäuses**
Micro mechanical pressure transducer with sensor at the separating diaphragm of the housing
Capteur de pression micromécanique avec le transducteur sur le diaphragme de séparation de la boîte

(30) Priorität: 16.07.2002 DE 10232721
(43) Veröffentlichungstag der Anmeldung: 21.01.2004
(73) Patentinhaber: SIEMENS AKTIENGESELLSCHAFT, 80333 München (DE); First Sensor Technology GmbH, 12489 Berlin (DE)
(72) Erfinder: Krause, Peter, 15232 Frankfurt/Oder (DE); Steckenborn, Arno, 13589 Berlin (DE)
(74) Vertreter: Maier, Daniel Oliver

(56) Entgegenhaltungen:
- WO-A-00/33047
- WO-A-86/02446
- WO-A-88/01049
- DE-A- 19 603 674
- DE-C- 19 644 830
- US-A- 5 587 601
- US-A- 5 614 677

## Beschreibung

Die Erfindung betrifft einen Druckgeber mit einem Gehäuse, in dem sich eine Kavität für ein Fluid, dessen Druck gemessen werden soll, befindet und an dem ein membranartiger Drucksensor in mikromechanischer Bauweise befestigt ist.

Ein solcher Drucksensor ist beispielsweise aus dem Aufsatz "A micromachined pressure/flow-sensor" von Oosterbroek und anderen, erschienen in Sensors and Atuators 77 (1999), Seiten 167 bis 177 bekannt. Gemäß Figur 2 dieses Dokumentes ist ein Druckgeber beschrieben, bei dem in einem Gehäuse eine verzweigte Kavität als Kanalsystem ausgebildet ist, welche der Aufnahme eines Fluides, dessen Druck gemessen werden soll, dient. An diesem Gehäuse sind zwei membranartige Drucksensoren befestigt, welche einen integralen Bestandteil des Gehäuses darstellen und so die Kavität gemeinsam mit dem Gehäuse bilden. Dadurch sind die Membranen der Sensoren mit dem Fluid direkt beaufschlagbar, wobei deren Verformung aufgrund des durch das Fluid anliegenden Druckes piezoresistiv ermittelt werden kann.

Weiterhin ist es bekannt, membranartige Drucksensoren in mikromechanischer Bauweise an nicht mikromechanisch hergestellte Systeme beispielsweise aus der Lebensmittelbranche anzupassen. Gemäß der DE 198 10 756 A1 wird dies mit Hilfe eines Trägersubstrates bewerkstelligt, auf dem der in mikromechanischer Bauweise gefertigte Drucksensor befestigt wird. Mit dem Trägersubstrat kann der Druckgeber dann in eine hierfür geeignete Einbauöffnung beispielsweise eines Druckbehälters eingebaut werden, wobei das Trägersubstrat einen in der DE 198 10 756 A1 als fugenoptimiert bezeichneten Einbau ermöglicht, d. h., dass ein Einbau oberflächenbündig im Bezug auf die Innenfläche des Druckbehälters möglich ist, so dass durch eine vereinfachte Reinigungsmöglichkeit des beispielsweise in der Lebensmittelindustrie eingesetzten Systems den Hygienevorschriften entsprochen werden kann.

Gemäß der WO 88/01049 ist ein Druckgeber in mikromechanischer Bauweise beschrieben, bei dem ein membranartiger Drucksensor verwendet wird, der als Wafer ausgeführt ist. Auch die Kavitäten werden durch Ätzgruben und senkrecht angeordnete Bohrungen in jeweils benachbarten Wafern ausgebildet, wobei die Kavitäten jeweils nur einen Anschluss aufweisen und insofern als tote Enden ausgeführt sind.

Weiterhin sind aus der WO 86/02446 und der US 5,614,677 Druckgeber bekannt, welche beispielsweise zur Messung des Blutdrucks zum Einsatz kommen können. Die in den jeweiligen Gehäusebauteilen verwirklichten Kavitäten können durchströmt werden, wobei der zu messende Druck über eine Trennmembran abgreifbar ist. In der WO 86/02446 weist der an die Trennmembran angrenzende Gehäuseraum einen gewölbten Boden auf, in den die den Einlass und Auslass bildenden Leitungen münden, wobei an der Übergangsstelle zwischen Einlass bzw. Auslass und Gehäuseraum ein plötzlicher Querschnittssprung entsteht.

Die Aufgabe der Erfindung besteht darin, einen Druckgeber mit Gehäuse und Drucksensor anzugeben, welcher geringe Abmessungen aufweist und auch mit wechselnden zu messenden Fluiden betrieben werden kann.

Diese Aufgabe wird erfindungsgemäß dadurch gelöst, dass die Kavität derart ausgebildet ist, dass sie eine vom Einlass zum Auslass zumindest im Wesentlichen laminar durchströmbare Kanalstruktur in mikromechanischer Bauweiseausbildet. Die Ausbildung einer laminar durchströmbaren Kanalstruktur lässt sich dadurch erreichen, dass in der Kanalstruktur plötzliche Querschnittssprünge vermieden werden. Weiterhin muss die Ausbildung von Kanalteilen mit einem toten Ende vollständig vermieden werden. Diese Maßnahmen sind vorteilhaft dazu geeignet, die Ausbildung von so genannten Totvolumina zu verhindern, in denen ein gleichmäßiger Austausch eines in der Kavität strömenden Fluides erschwert oder durch die Bildung von Wirbeln sogar gänzlich verhindert würde. Wenn die Kanalstruktur im Wesentlichen laminar vom Einlass zum Auslass durchströmt werden kann, so hat dies den Vorteil, dass ein Austausch des gesamten in der Kavität befindlichen Fluides in kürzester Zeit erfolgen kann. Dies ermöglicht den Einsatz des erfindungsgemäßen Druckgebers auch bei wechselnden, zu messenden Fluiden - insbesondere kann auch ein Spülvorgang der Kanalstruktur zwischen einem Fluidwechsel in kürzester Zeit durchgeführt werden.

Die Gestaltung des Druckgebers mit einer Trennmembran für den Drucksensor und einer vom Drucksensor unabhängigen, die Kanalstruktur bildenden Kavität ist der Bildung einer im Wesentlichen laminar durchströmbaren Kanalstruktur besonders förderlich, da sich durch die getrennte Ausbildung von Gehäuse und Drucksensor Kanalstrukturen mit besonders einfach ausgebildeter Geometrie erzeugen lassen, welche eine laminare Durchströmung durch das Fluid ermöglichen.

Der Drucksensor kann als Standardbauteil ausgeführt werden, so dass der konstruktive Aufwand für den Drucksensor nur einmalig anfällt und das Bauteil in großer Stückzahl gefertigt werden kann. Hierdurch vereinfacht sich vorteilhaft die Herstellung unterschiedlicher Druckgeber, bei denen lediglich das mikromechanisch hergestellte Gehäuse variiert werden muss. Die Trennmembran stellt dabei gleichzeitig einen Schutz für den Druckgeber vor dem Fluid dar, so dass der Druckgeber nicht resistent gegenüber dem Fluid mit dem zu messenden Druck sein muss.

Weiterhin vereinfacht sich auch die Gestaltung des Gehäuses selbst, da bei der Herstellung des Druckgebers der Drucksensor nicht als integraler, die Kavität mitbildender Bestandteil des Gehäuses gefertigt werden muss, sondern auf dem fertiggestellten Gehäuse montiert werden kann. Bei Strukturen in mikromechanischer Bauweise bewirkt die Trennung der Funktionalitäten daher vorteilhaft auch einer Vereinfachung des Herstellungsverfahrens.

Gemäß einer Weiterbildung der Erfindung ruft die Verbindung zwischen der Trennmembran und dem membranartigen Drucksensor eine Vorspannung in den verbundenen Membranen hervor. Diese Vorspannung kann beispielsweise durch die bereits erwähnte Beschichtung einer oder beider benachbart liegender Membranen erfolgen, wobei die Beschichtungsdicke größer ist als die Spaltbreite zwischen den Membranen. Hierdurch kann vorteilhafterweise die Funktionszuverlässigkeit des Druckgebers verbessert werden, da die Vorspannung eine zuverlässige Übertragung des zu messenden Druckes von der Trennmembran auf die Messmembran des Drucksensors gewährleistet.

Gemäß einer besonders vorteilhaften Ausgestaltung der Erfindung ist der die Trennmembran aufweisende Teil des Gehäuses aus einem Basissubstrat gebildet. Das Basissubstrat kann mittels der in der Mikrotechnik bekannten Verfahren, beispielsweise durch Mikrofräsen oder Ätzen bearbeitet werden. Damit ist die komplette Fertigung des Druckgebers in mikromechanischer Bauweise möglich. In dieser Ausführungsform des Gehäuses lässt sich der Drucksensor vorteilhafterweise auch einfach in eine Kanalstruktur in mikromechanischer Bauweise, z. B. einen Mikroreaktor, integrieren, wobei die Kanalstruktur durch das Gehäuse mitgebildet wird.

Für die mikromechanische Bauweise der Trennmembran ist es vorteilhaft, wenn das Basissubstrat mehrschichtig mit einer die Trennmembran bildenden ersten Schicht, einer darauf folgenden Ätzstoppschicht und einer hierauf folgenden zweiten Schicht aufgebaut ist, in der zur Bildung der Trennmembran die Kavität durch Ätzen bis auf die Ätzstoppschicht hinab hergestellt ist. Die Ätzstoppschicht ermöglicht somit vorteilhafterweise eine hochgenaue Fertigung der Trennmembran mit definierter Dicke. Dabei können Fertigungsungenauigkeiten aufgrund des Fertigungsverfahrens weitgehend eliminiert werden. Dabei kann auf marktübliche Basissubstrate mit einem entsprechenden Aufbau zurückgegriffen werden.

Eine vorteilhafte Ausführungsform des Druckgebers sieht vor, dass zur Bildung einer Sensormembran des membranartigen Drucksensors in einem Sensorsubstrat eine ringförmige Vertiefung ausgebildet ist, so dass der im Inneren der Vertiefung befindliche Teil des Sensorsubstrates eine Versteifungsstruktur für die Sensormembran bildet, welche mit der Trennmembran in Verbindung steht. Die ringförmige Vertiefung kann einen kreisförmigen Verlauf, genauso aber auch einen anderen Verlauf, wie z. B. einen rechteckigen Verlauf in der Oberfläche des Sensorsubstrates aufweisen. Mit der Versteifungsstruktur ist vorteilhaft eine Funktionsintegration gewährleistet, nämlich einerseits die Sensormembran zu versteifen, um ein definiertes Druck-Weg-Verhalten zu erzielen, und andererseits eine starre Verbindung zwischen der Sensormembran und der Trennmembran zu erzeugen. Die Funktionsintegration trägt vorteilhaft weiter zur Verringerung des für den Druckgeber notwendigen Bauraumes bei.

Eine andere Ausführungsform des Druckgebers sieht vor, dass zur Bildung einer Sensormembran des membranartigen Sensors in einem Sensorsubstrat eine Vertiefung ausgebildet ist und die der Vertiefung abgewandte Seite der Sensormembran mit der Trennmembran in Verbindung steht. Dadurch ist vorteilhafterweise die Trennmembran der Sensormembran direkt benachbart, so dass ein Übertragungsglied eingespart werden kann bzw., wie bereits erwähnt, durch eine Beschichtung einer der Membranen gebildet werden kann.

Bei dieser Ausführungsform des Druckgebers ist es vorteilhaft, wenn auf dem Gehäuse, insbesondere dem Basissubstrat, vorgesehene elektrische Leitstrukturen mit auf dem Sensorsubstrat vorgesehenen elektrischen Leitstrukturen mittels Kontakt-Bumps verbunden sind. Hierbei kann vorteilhafterweise auf die an sich bekannte, so genannte Flip-Chip-Technik zurückgegriffen werden, um eine elektrische Kontaktierung zwischen dem Drucksensor und den weiteren Teilen des Druckgebers zu erreichen. Der Drucksensor wird an der dem Gehäuse zugewandten Seite mit den Kontakt-Bumps versehen, welche gleichzeitig für dessen Fixierung auf dem Gehäuse eingesetzt werden können. Der Vorteil der beschriebenen Variante liegt darin, dass die elektrischen Anschlüsse miniaturisiert werden können, wodurch eine weitere Verringerung der Baugröße des Druckgebers erreichbar ist.

Das Gehäuse weist vorteilhaft mindestens einen Anschluss für das Fluid auf. Mittels des Anschlusses kann der Druckgeber an beliebige Strukturen angebaut werden, wobei eine fluidische Verbindung zwischen dieser Struktur und dem Druckgeber hergestellt wird. Damit ist die Fertigung des gesamten Druckgebers als Standardteil möglich, wodurch ein breites Einsatzgebiet entsteht. Besonders vorteilhaft ist es, wenn das Gehäuse mit einem Einlass und einem Auslass für das Fluid ausgestattet ist. Hierdurch kann der Druck im Durchflussverfahren gemessen werden, wodurch insbesondere bei wechselnden Fluiden eine schnelle Durchspülung der Druckmesskammer und damit verbunden geringe Totzeiten für den im Gehäuse ablaufenden Prozess verbunden sind.

Eine zusätzliche Ausführungsform der Erfindung sieht vor, dass an der dem Fluid abgewandten Seite der Trennmembran ein Temperaturfühler angebracht ist. Hierdurch lässt sich mittels des Druckgebers bei geringem Platzaufwand gleichzeitig eine Temperaturüberwachung des Fluides vornehmen. Der Temperaturfühler kann dabei direkt an der Trennmembran angebracht werden, so dass aufgrund der vergleichsweise dünnen Wandstärke der Membran eine direkte Temperaturmessung möglich ist. Durch die Funktionsintegration der Druck- und Temperaturmessung ist vorteilhaft eine weitere Verringerung des für die Sensoren benötigten Bauraums möglich.

Weitere Einzelheiten der Erfindung werden im Folgenden anhand der Zeichnungen beschrieben. Hierbei zeigen
- Figur 1: ein Ausführungsbeispiel eines Druckgebers, bei dem der Drucksensor in Flip-Chip-Technologie montiert ist, als schematischen Schnitt und
- Figur 2: ein Ausführungsbeispiel eines Druckgebers mit einem Drucksensor, der eine Versteifungsstruktur für die Sensormembran aufweist, als schematischen Schnitt.

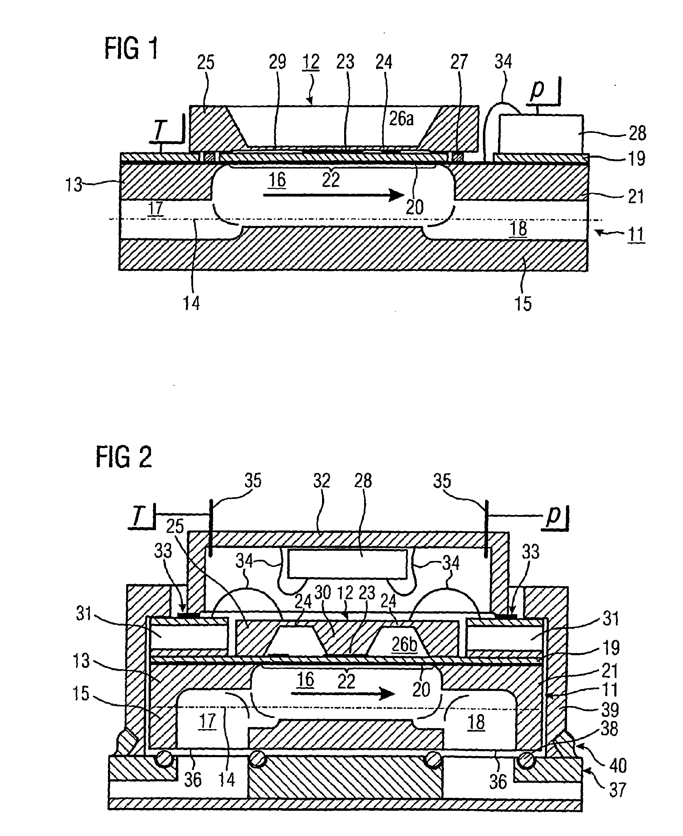

Der in Figur 1 dargestellte Druckgeber besteht im Wesentlichen aus einem Gehäuse 11 und einem Drucksensor 12. Das Gehäuse 11 weist ein Basissubstrat 13 auf, welches entlang einer Trennfuge 14 mit einem Deckelteil 15 durch Bonden verbunden ist. In dem Verbund zwischen Basissubstrat und Deckenteil ist eine Kavität 16 ausgebildet, welche einen Einlass 17 und einen Auslass 18 für ein Fluid aufweist, dessen Druck gemessen werden soll.

Das Basissubstrat besteht aus einer ersten Schicht 19, einer darauf folgenden Ätzstoppschicht 20 und einer hierauf folgenden zweiten Schicht 21. Die Kavität 16 ist durch Ätzen der zweiten Schicht 21 des Basissubstrates hergestellt. Die zweite Schicht wird bis auf die Ätzstoppschicht 20 hinabgeätzt, so dass die Ätzstoppschicht und die jenseits der Ätzstoppschicht liegende erste Schicht 19 eine Trennmembran 22 bilden. Das Basissubstrat kann beispielsweise ein SOI-Si-Wafer (Silizium on Insulator- Silizium-Wafer) sein, wobei die "Insulator-Schicht" die Ätzstoppschicht 20 darstellt. Alternativ kann die Kavität im Basissubstrat allerdings auch beispielsweise als keramisches Formteil durch Laminieren sogenannter Greentapes hergestellt werden.

Über eine Verbindungsschicht 23, die z. B. aus Siliziumoxid oder auch einem Polymer gebildet sein kann, ist die Trennmembran mit einer Sensormembran 24 verbunden, die als Teil eines Sensorsubstrates 25 durch Ätzen einer Vertiefung 26a gebildet ist. Der Drucksensor ist mittels Kontakt-Bumps 27 im Bereich der Trennmembran, also des in der Wandstarke verdünnten Teil des Gehäuses, fixiert, wobei die Kontakt-Bumps 27 gleichzeitig der elektrischen Verbindung zwischen nicht näher dargestellten Leitstrukturen auf dem Drucksensor und dem Gehäuse dienen.

Wird die Trennmembran 22 aufgrund des sich in der Kavität 16 befindlichen Fluides einer Druckbeaufschlagung ausgesetzt, so biegt sie sich zur Sensormembran hin durch, welche wegen der starren Verbindung über die Verbindungsschicht 23 ebenfalls verformt wird. Diese Verformung wird mittels von am Rande der Sensormembran 24 implantierten oder diffundierten, nicht dargestellten Widerständen erfasst. Diese Widerstände sind über die Kontakt-Bumps 27 mit einer Auswertungseinheit 28 verbunden, welche ein Drucksignal p liefert.

Weiterhin ist auf der Trennmembran 22 ein Temperaturfühler 29 gebildet, der beispielsweise aus einer Metallschicht bestehen kann, deren Widerstand sich temperaturabhängig verändert. Über eine entsprechende elektrische Verbindung ist ein Temperatursignal T erzeugbar.

Figur 2 zeigt eine alternative Ausgestaltung eines Druckgebers nach der Erfindung, wobei Bauteile, die in ihrer Funktion dem Druckgeber gemäß Figur 1 entsprechen, mit den gleichen Bezugszeichen versehen sind und nicht näher erläutert werden.

Der Druckgeber gemäß Figur 2 unterscheidet sich in der Anbringung des Temperatursensors 12. Die Sensormembran 24 ist als ringförmige Vertiefung 26b ausgebildet, so dass innerhalb dieser ringförmigen Vertiefung eine Versteifungsstruktur 30 gebildet ist. Diese Versteifungsstruktur vergrößert die Steifigkeit der Membran 24, deren Verformung dadurch mit einer definierten Geometrie erzeugbar ist. Weiterhin ist die Versteifungsstruktur 30 über die Verbindungsschicht 23 mit der Trennmembran 22 verbunden, was durch eine Montage des Drucksensors 12 auf dem Bereich mit der Trennmembran 22 des Gehäuses 11 derart erfolgt, dass die Vertiefung dem Gehäuse zugewandt ist. Der Drucksensor kann beispielsweise durch Kleben mit dem Gehäuse verbunden werden.

Auf dem Gehäuse ist weiterhin eine Tragstruktur 31 für die Aufnahme einer Schutzkappe 32 für den Drucksensor 12 befestigt. Die Schutzkappe ist über Lötverbindungen 33 mit der Tragstruktur 31 verbunden, wobei in der Schutzkappe gleichzeitig die Auswertungseinheit 28 untergebracht ist. Die Lötverbindungen 33 sowie Bonddrähte 34 sorgen für eine elektrische Kontaktierung zwischen Drucksensor 11 und der Auswertungseinheit 28 mittels nicht näher dargestellter Leiterbahnen, welche in der Schutzkappe 32, der Tragstruktur 31 und dem Drucksensor 12 vorgesehen sind. Auf die gleiche Weise sind Steckverbindungen 35 in der Schutzkappe kontaktiert, die ein Auslesen der Sensorsignale p, T ermöglichen.

Bei der Ausführungsform gemäß Figur 2 sind der Einlass 17 und der Auslass 18 jeweils als Anschluss 36 ausgebildet. Über die Anschlüsse 36 ist der Druckgeber mit einer Trägerplatte 37 verbunden, welche ein Kanalsystem in mikromechanischer Bauweise enthält. Dieses Kanalsystem bildet beispielsweise einen Mikroreaktor. Die Anschlüsse sind über O-Ringe 38 abgedichtet. Für eine Fixierung des Druckgebers 11 auf der Trägerplatte 37 sorgt eine Befestigungsklammer 39, welche sich auf der Tragstruktur 31 abstützt und mittels einer Rastverbindung 40 mit der Trägerplatte 37 verbunden wird.

## Patentansprüche

1. Druckgeber mit einem Gehäuse (11), in dem sich eine Kavität (16) mit einem Einlass (17) und einem Auslass (18) für ein Fluid, dessen Druck gemessen werden soll, befindet, und mit einem eine Sensormembran (24) aufweisenden membranartigen Drucksensor (12) in mikromechanischer Bauweise, wobei in dem Gehäuse eine Trennmembran (22) als eine in der Wandstärke verdünnte Region des Gehäuses (11) ausgebildet ist, die auf ihrer einen Seite mit dem membranartigen Drucksensor (12) verbunden ist und auf ihrer anderen Seite mit dem Fluid mit dem zu messenden Druck beaufschlagbar ist,
**dadurch gekennzeichnet,**
**dass** das Gehäuse zur Gewährleistung einer zumindest im Wesentlichen laminaren Durchströmbarkeit vom Einlass (17) zum Auslass (18) in mikromechanischer Bauweise ausgeführt ist und zwischen der Sensormembran (24) und der Trennmembran (22) eine starre Verbindung ausgebildet ist.

2. Druckgeber nach Anspruch 1,
**dadurch gekennzeichnet,**
**dass** die Verbindung zwischen der Trennmembran (22) und dem membranartigen Drucksensor (12) eine Vorspannung in den verbundenen Membranen hervorruft.

3. Druckgeber nach einem der vorangehenden Ansprüche,
**dadurch gekennzeichnet,**
**dass** der die Trennmembran aufweisende Teil des Gehäuses (11) aus einem Basissubstrat (13) gebildet ist.

4. Druckgeber nach Anspruch 3,
**dadurch gekennzeichnet,**
**dass** das Basissubstrat (13) mehrschichtig mit einer die Trennmembran (22) bildenden ersten Schicht (19), einer darauf folgenden Ätzstoppschicht (20) und einer hierauf folgenden zweiten Schicht (21) aufgebaut ist, in der zur Bildung der Trennmembran die Kavität (16) durch Ätzen bis auf die Ätzstoppschicht (20) hinab hergestellt ist.

5. Druckgeber nach einem der vorangehenden Ansprüche,
**dadurch gekennzeichnet,**
**dass** zur Bildung der Sensormembran (24) des membranartigen Drucksensors in einem Sensorsubstrat (25) eine ringförmige Vertiefung (26b) ausgebildet ist, so dass der im Inneren der Vertiefung (26b) befindliche Teil des Sensorsubstrates (25) eine Versteifungsstruktur (30) für die Sensormembran bildet, welche mit der Trennmembran (22) in Verbindung steht.

6. Druckgeber nach einem der Ansprüche 1 bis 4,
**dadurch gekennzeichnet,**
**dass** zur Bildung der Sensormembran (24) des membranartigen Sensors (12) in einem Sensorsubstrat (25) eine Vertiefung (26a) ausgebildet ist und die der Vertiefung (26a) abgewandte Seite der Sensormembran (24) mit der Trennmembran (22) in Verbindung steht.

7. Druckgeber nach Anspruch 6,
**dadurch gekennzeichnet,**
**dass** auf dem in mikromechanischer Bauweise ausgeführten Teil des Gehäuses vorgesehene elektrische Leitstrukturen mit auf dem Sensorsubstrat (25) vorgesehenen elektrischen Leitstrukturen mittels Kontakt-Bumps (27) verbunden sind.

8. Druckgeber nach einem der vorangehenden Ansprüche,
**dadurch gekennzeichnet,**
**dass** an der dem Fluid abgewandten Seite der Trennmembran (22) ein Temperaturfühler (29) angebracht ist.

## Claims

1. Pressure transmitter comprising a housing (11) in which there is a cavity (16) with an inlet (17) and an outlet (18) for a fluid whose pressure is to be measured, and comprising a diaphragm-like pressure sensor (12) of micromechanical design, having a sensor diaphragm (24), in the housing there being formed a dividing diaphragm (22) as a region of the housing (11) in which the wall thickness is reduced, which on its one side is connected to the diaphragm-like pressure sensor (12) and on its other side can be acted on by the fluid with the pressure to be measured, **characterized in that** the housing is embodied such that it is of micromechanical design in order to ensure that an at least substantially laminar through-flow can take place from the inlet (17) to the outlet (18) and a rigid connection is formed between the sensor diaphragm (24) and the dividing diaphragm (22).

2. Pressure transmitter according to Claim 1, **characterized in that** the connection between the dividing diaphragm (22) and the diaphragm-like pressure sensor (12) causes prestress in the connected diaphragms.

3. Pressure transmitter according to one of the preceding claims, **characterized in that** the part of the housing (11) which has the dividing diaphragm is formed on a base substrate (13).

4. Pressure transmitter according to Claim 3, **characterized in that** the base substrate (13) is built up in a plurality of layers with a first layer (19) forming the dividing diaphragm (22), a following etch stop layer (20) and a second layer (21) following this, in which, in order to form the dividing diaphragm, the cavity (16) is produced by etching down as far as the etch stop layer (20).

5. Pressure transmitter according to one of the preceding claims, **characterized in that**, in order to form a sensor diaphragm (24) of the diaphragm-like pressure sensor, an annular depression (26b) is formed in a sensor substrate (25), so that the part of the sensor substrate (25) which is located in the interior of the depression (26b) forms a reinforcing structure (30) for the sensor diaphragm, which is connected to the dividing diaphragm (22).

6. Pressure transmitter according to one of Claims 1 to 4, **characterized in that**, in order to form a sensor diaphragm (24) of the diaphragm-like sensor (12), a depression (26a) is formed in a sensor substrate (25), and the side of the sensor diaphragm (24) facing away from the depression (26a) is connected to the dividing diaphragm (22).

7. Pressure transmitter according to Claim 6, **characterized in that** electric conductive structures provided on the part of the housing of micromechanical design are connected by means of contact bumps (27) to electric conductive structures provided on the sensor substrate (25).

8. Pressure transmitter according to one of the preceding claims, **characterized in that** a temperature sensor (29) is fitted to that side of the dividing diaphragm (22) which faces away from the fluid.

## Revendications

1. Capteur de pression comprenant un boîtier (11), dans lequel se trouve une cavité (16) ayant une entrée (17 ) et une sortie (18) pour un fluide dont il faut mesurer la pression, et un détecteur (12) de pression en mode de construction micromécanique du type à membrane, ayant une membrane (24) de détecteur, dans lequel il est formé dans le boîtier une membrane (22) de séparation sous la forme d'une région du boîtier (11) à épaisseur de paroi amincie, qui est reliée, sur l'un de ses côtés, au détecteur (12) de pression du type à membrane et, sur son autre côté, est alimentée en le fluide ayant la pression mesurée,
**caractérisé**
**en ce que** le boîtier, pour assurer une possibilité de passage au moins sensiblement laminaire de l'entrée (17) à la sortie (18), est réalisé en mode de construction micromécanique et il est formé une liaison rigide entre la membrane (24) du détecteur et la membrane (22) de séparation.

2. Capteur de pression suivant la revendication 1,
**caractérisé**
**en ce que** la liaison entre la membrane (22) de séparation et le détecteur (12) de pression du type à membrane provoque une précontrainte dans les membranes reliées.

3. Capteur de pression suivant l'une des revendications précédentes,
**caractérisé**
**en ce que** la partie du boîtier ( 11) ayant la membrane de séparation est formée en un substrat ( 13 ) de base.

4. Capteur de pression suivant la revendication 3,
**caractérisé**
**en ce que** le substrat (13) de base est formé en plusieurs couches ayant une première couche (19) formant la membrane (22) de séparation, une couche (20) d'arrêt d'attaque suivant dessus et une deuxième couche (21) suivant dessus, dans laquelle, pour former la membrane de séparation, la cavité (16) est ménagée par attaque jusqu'à la couche ( 20) d'arrêt d'attaque.

5. Capteur de pression suivant l'une des revendications précédentes,
**caractérisé**
**en ce que** pour fermer la membrane (24) de détecteur du détecteur de pression du type à membrane dans un substrat ( 25) de détecteur, il est formé un évidement (26b) annulaire, de manière à ce que la partie du substrat (25) de détecteur se trouvant à l'intérieur de l'évidement (26b) forme une structure (30) de renfort de la membrane de détecteur, qui est en liaison avec la membrane (22) de séparation.

6. Capteur de pression suivant l'une des revendications 1 à 4,
**caractérisé**
**en ce que** pour former la membrane (24) de détecteur du détecteur (12) membrane dans un substrat (25) de détecteur, il est formé un évidement (26a) et le côté de la membrane (24) de détecteur qui est éloignée de l'évidement ( 26a) est en liaison avec la membrane (22) de séparation.

7. Capteur de pression suivant la revendication 6,
**caractérisé**
**en ce que** les structures conductrices de l'électricité prévues sur la partie du boîtier réalisée en mode de construction micromécanique sont reliées au moyen de bossages (27) de contact à des structures conductrices de l'électricité prévues sur le substrat (25) du détecteur.

8. Capteur de pression suivant l'une des revendications précédentes,
**caractérisé**
**en ce qu'**une sonde (29) de température est apposée sur la face de la membrane (22) de séparation éloignée du fluide.
